# EUROPÄISCHE PATENTSCHRIFT

(11) **EP 3 877 963 B1**
(45) Veröffentlichungstag und Bekanntmachung des Hinweises auf die Patenterteilung: **25.06.2025**
(21) Anmeldenummer: 20776103.2
(22) Anmeldetag: 17.09.2020
(51) Int. Cl.: G08C 17/02, H04Q 9/00

(54) **TRAGBARE STEUERVORRICHTUNG ZUM STEUERN EINES BEWEGUNGSSENSORS**
PORTABLE CONTROL APPARATUS FOR CONTROLLING A MOTION SENSOR
APPAREIL DE COMMANDE PORTATIF POUR COMMANDER UN CAPTEUR DE MOUVEMENT

(30) Priorität: 01.10.2019 DE 102019126496
(43) Veröffentlichungstag der Anmeldung: 15.09.2021
(73) Patentinhaber: Steinel GmbH, 33442 Herzebrock-Clarholz (DE)
(72) Erfinder: MÖLLER, Thomas, 32049 Herford (DE)
(74) Vertreter: Mathys & Squire
(86) Internationale Anmeldenummer: PCT/EP2020/076051
(87) Internationale Veröffentlichungsnummer: WO 2021/063697

(56) Entgegenhaltungen:
- DE-A1- 102016 224 330
- GB-A- 2 524 029
- JP-A- 2002 101 165
- US-A1- 2005 128 067
- US-A1- 2017 245 347
- US-B1- 10 156 581

## Beschreibung

Die vorliegende Erfindung betrifft tragbare Steuervorrichtungen zum Steuern von Bewegungsmeldern sowie Verfahren zum Steuern von Bewegungsmeldern mittels tragbaren Steuervorrichtungen.

Für die Erfassung von Bewegungen mittels Bewegungsmeldern stehen verschiedene Technologien zur Verfügung. So können unter anderem mittels Infrarotstrahlung, Radarwellen, Ultraschall oder auch basierend auf Kamerabildern Bewegungen erfasst werden. Um unerwünschte Bewegungserfassungen zu vermeiden, ist es hierzu stets notwendig, Einstellungen an den Bewegungssensoren vorzunehmen. Neben der offensichtlich notwendigen Justage des Sicht- oder Erfassungsbereich der Bewegungssensoren kann es aber möglich bzw. notwendig sein, weitere Betriebsparameter einzustellen. Insbesondere die Einstellbarkeit der Reichweite der Bewegungsdetektion, d.h. des maximalen Abstands, bis zu dem eine Bewegung erfasst werden soll, ist hierbei von Interesse, aber meist schwierig zu realisieren.

So ist es üblicher Weise nötig, aus den Messwerten der verschiedenen Bewegungsmeldertypen auf die daraus resultierende "Sensorreichweite" zu schließen. Zum Beispiel hat ein Radarsensor keine feste Reichweite. Eine Abgrenzung zwischen einer Bewegungserfassung im näheren Umfeld von der nicht stattfindenden Bewegungserfassung in weiterer Entfernung geschieht hierbei über das Setzen eines Schwellwertes für die vom Sensor detektierte Intensität der empfangenen, rückgestreuten Radarwellen. Ein geringer Schwellwert entspricht hierbei der Möglichkeit, Bewegungen auch bei größeren Entfernungen festzustellen, während ein hoher Schwellwert die Bewegungserfassung auf den Nahbereich des Sensors einschränkt.

Die Druckschrift US 2017/245347 A1 beschreibt beispielsweise einen Bewegungssensor, der drahtlos mit einem Benutzergerät kommunizieren kann, sodass Sensoreinstellungen über eine auf dem Benutzergerät ausgeführte Anwendung angepasst werden können.

Die GB 2 524 029 A offenbart ein System zur Prüfung eines Präsenzmelders. Eine Sensoreinheit ist an einer Oberfläche eines Gebäudes angebracht. Die Sensoreinheit umfasst ein Sensorelement zur Erfassung einer Anwesenheit. Ein entferntes Gerät ist so angeordnet, dass es mit der Sensoreinheit über drahtlose Signale kommuniziert. Die entfernte Vorrichtung umfasst eine Anzeige 121. Die Sensoreinheit ist so eingerichtet, dass sie in einem Testmodus arbeitet, in dem sie als Reaktion auf die Erkennung einer Anwesenheit durch das Sensorelement der Sensoreinheit ein Erkennungssignal an die entfernte Vorrichtung sendet. Die entfernte Vorrichtung ist so eingerichtet, dass sie als Reaktion auf den Empfang eines Erfassungssignals von der Sensoreinheit die Anzeige aktiviert, um die Erfassung einer Anwesenheit anzuzeigen.

Um die Reichweite eines Radarsensors einzustellen, ist es bisher notwendig, einen bestimmten Schwellwert am Sensor einzustellen und hierauf durch das Ausführen einer Bewegung im Erfassungsbereich des Sensors zu prüfen, ob der Schwellwert der gewünschten Reichweite entspricht. Ist dies nicht der Fall, muss der Schwellwert wiederum am Sensor verstellt werden und das Ergebnis erneut in entsprechender Entfernung zum Sensor geprüft werden. Diese Schritte erfolgen so lange, bis ein zufriedenstellendes Ergebnis für die Sensorreichweite gefunden wurde.

In ähnlicher Weise können auch bei anderen Sensortypen Einstell- und Prüfoperationen notwendig sein, bis eine gewünschte Sensorreichweite gefunden ist, da sich die Sensormesswerte nicht direkt in eine Reichweitenskala umsetzen lassen.

Hierdurch ergibt sich ein erheblicher Zeitverlust bei der Installation und Wartung von Bewegungssensoren, insbesondere bei größeren Anlagen, in denen eine Vielzahl von Bewegungsmeldern verbaut ist, wie etwa in Hotels, Tiefgaragen oder dergleichen. Selbst ein geschulter Techniker wird für das Einstellen der Reichweite den Sensor im Durchschnitt mindestens zweimal einstellen und prüfen müssen. Setzt man für einen Durchgang von Einstellen und Prüfen 10 Minuten an (Hochsteigen zum zumeist in Deckennähe angebrachten Sensor, Verstellen des Schwellwerts, Positionieren im Erfassungsbereich, Prüfen der Reichweite) so ergibt sich für eine Anlage mit 10 Bewegungssensoren ein Zeitaufwand von 200 Minuten, also ca. dreieinhalb Stunden. Die derzeit vorgenommene Reichweiteneinstellung von Bewegungsmeldern ist also extrem zeitaufwändig und damit kostenintensiv.

Es ist daher Aufgabe der Erfindung eine Steuervorrichtung für Bewegungssensoren anzugeben, mit der eine der Reichweiteneinstellung entsprechende Ansteuerung vorgenommen werden kann, die verlässlich, rasch und einfach durchführbar ist. Diese Aufgabe wird mit dem Gegenstand der unabhängigen Ansprüche gelöst, der die vorliegende Erfindung definiert. Ausführungsformen, die nicht durch den Gegenstand der Ansprüche abgedeckt sind, stellen keinen Teil der Erfindung dar.

Erfindungsgemäss umfasst eine tragbare Steuervorrichtung zum Steuern eines Bewegungssensors Kommunikationsmittel, Anzeigemittel und Eingabemittel.

Die Kommunikationsmittel dienen zum drahtlosen Kommunizieren mit einem Bewegungssensor und sind geeignet, ein momentan in dem Bewegungssensor erzeugtes Erfassungssignal von dem Bewegungssensor zu empfangen, während die Steuervorrichtung sich in einem Erfassungsbereich des Bewegungssensors befindet. Die Anzeigemittel dienen zum Anzeigen dieses Erfassungssignals. Die Eingabemittel dienen zum Einstellen eines Erfassungsschwellwerts, bei dem von dem Bewegungssensor eine Bewegung erfasst wird, basierend auf dem angezeigten Erfassungssignal. Hierbei wird der eingestellte Erfassungsschwellwert durch die Kommunikationsmittel an den Bewegungssensor übertragen und dort als gültiger Erfassungsschwellwert gesetzt.

Es wird also eine tragbare Steuervorrichtung zum Einstellen des Erfassungsschwellwert verwendet, die es ermöglicht, den Erfassungsschwellwert im Erfassungsbereich des Bewegungssensors zu verändern. Hierzu ist die Steuervorrichtung mit Kommunikationsmitteln, wie etwa einer Funkantenne oder einer Bluetooth-Schnittstelle ausgestattet. Während ein Bediener der Steuervorrichtung sich mit dieser im Erfassungsbereich des Bewegungssensors bewegt, wird vom Bewegungssensor ein der Bewegung entsprechendes Erfassungssignal erzeugt und der Steuervorrichtung über die Kommunikationsmittel mitgeteilt.

Das Erfassungssignal wird hierauf auf Anzeigemitteln der Steuervorrichtung wiedergegeben, bei denen es sich um einen Bildschirm handeln kann. Das Erfassungssignal kann hierbei in einem Speicher der Steuervorrichtung gespeichert werden.

Kommunikationsmittel und Anzeigemittel erlauben es einem Bediener der Steuervorrichtung also, das von dem Bewegungsmelder tatsächlich ermittelte Signal zu betrachten, während er die Bewegungen ausführt, die das Signal erzeugen. Dadurch ist der Bediener in die Lage versetzt, unmittelbar zu begreifen, wie sich seine derzeit ausgeführten Bewegungen auf die Bewegungsdetektion auswirken. Es ist also nicht notwendig, dies durch Einstellen von Schwellwerten am Bewegungsmelder und anschließendes Prüfen der Einstellungen im Erfassungsbereich zu ermitteln. Vielmehr genügt ein einziger Blick auf die Anzeigemittel der mitgeführten Steuervorrichtung, um die Auswirkungen der momentan ausgeführten Bewegungen auf den Bewegungsmelder zu verstehen.

Der Erfassungsschwellwert kann dann in einfacher Weise mittels der Eingabemittel direkt in die Steuervorrichtung eingegeben und an den Bewegungsmelder übermittelt werden. Insbesondere kann der Erfassungsschwellwert auf den durch die momentane Bewegung verursachten Wert des Erfassungssignals eingestellt werden. Da typischer Weise eine näher am Sensor stattfindende Bewegung ein stärkeres Erfassungssignal generiert als eine weiter vom Sensor entfernt ausgeführte Bewegung, entspricht dies einer Einstellung des Erfassungsschwellwerts auf eine der Position des Bedieners entsprechenden Reichweite des Sensors.

Es ist also möglich, die Reichweite des Bewegungssensors in einfacher Weise einzustellen. Alles was hierzu notwendig ist, ist die Kommunikation zwischen Steuervorrichtung und Bewegungssensor herzustellen und die Neufestsetzung des Erfassungsschwellwerts zu signalisieren, sich im gewünschten Abstand vor dem Bewegungssensor zu bewegen und den Erfassungsschwellwert gemäß dem in diesem Moment angezeigten Erfassungssignal einzustellen. Hierdurch wird ein Großteil der zuvor nötigen Zeit für die Sensoreinstellung eingespart. Zudem wird die Einstellung der Reichweite aufgrund des nun möglichen Direktvergleichs zwischen Erfassungssignal und Erfassungsschwellwert verlässlicher.

Die Anzeigemittel und die Eingabemittel können hierbei kombiniert als Touch-Screen ausgebildet sein. Die Steuervorrichtung lässt sich in diesem Fall also z.B. mittels eines Smartphones oder eines Tablets realisieren, auf denen für die oben beschriebenen Funktionalitäten notwendige Programm oder Applikationen (Apps) gespeichert sind bzw. ausgeführt werden. Dies ermöglicht es bei vorhandener Kommunikationsschnittstelle mit den Bewegungssensoren, z.B. über Bluetooth, W-LAN oder NFC, jedes Smartphone oder dergleichen als Steuervorrichtung einsetzen zu können. Anschaffungskosten für zusätzliche Steuergeräte können damit entfallen.

Alternativ können die Eingabemittel aber auch getrennt von den Anzeigemitteln vorgesehen sein. Zum Beispiel kann eine Eingabe auch über Drehknöpfe, Schieberegler oder eine an der Steuervorrichtung angebrachte oder mit ihr verbundene Tastatur vorgenommen werden, wie etwa bei einem Laptop. Dies kann von Vorteil sein, wenn spezielle Funktionen implementiert werden sollen, die sich mit einem Smartphone oder dergleichen nicht realisieren lassen, wie z.B. erhöhte Schlagfestigkeit. Auch ist es möglich, die Anzeigemittel nicht als Bildschirm auszuführen, sondern z.B. in der Form mehrerer Leuchtanzeigen, die z.B. mittels fünf verschiedenen Leuchten fünf Stufen für die Erfassungssignalstärke wiedergeben. Der Schwellwert ließe sich dann entsprechend ebenfalls auf fünf Stufen einstellen, z.B. durch die Bedienung von Druck-, Drehköpfen oder Schiebern.

Gemäß einer nicht beanspruchten Ausführungsform kann der Signalaustausch zwischen Bewegungssensor und Steuervorrichtung auch weitgehend automatisch ablaufen. In diesem Fall ist die einzig notwendige Eingabe an der Steuervorrichtung, die Reichweiteneinstellung zu starten. Der Bewegungssensor misst dann das Erfassungssignal und stellt den Erfassungsschwellwert automatisch auf das gemessene Erfassungssignal ein. Das Erfassungssignal wird dann nur insoweit an der Steuervorrichtung "angezeigt", dass anhand der Steuervorrichtung erkennbar ist, dass eine Einstellung des Erfassungsschwellwerts gestartet wurde, bzw. dass diese vorgenommen wird. Auch auf diese Weise kann die Reichweite des Bewegungssensors in einfacher Weise eingestellt werden.

Die Anzeigemittel können geeignet sein, zusätzlich zum Erfassungssignal den eingestellten Erfassungsschwellwert anzuzeigen. Dies bietet eine besonders intuitive und damit aufgrund der einfachen Bedienbarkeit zeitsparende Einstellbarkeit der Reichweite.

Die Anzeigemittel sind geeignet, eine Intensität des momentan in dem Bewegungsmelder erzeugten Erfassungssignals anzuzeigen, und die Eingabemittel können geeignet sein, den Erfassungsschwellwert auf einen Intensitätswert einzustellen.

Vom Bewegungssensor wird also die Intensität des empfangenen Erfassungssignals an die Steuervorrichtung gesendet. Hierbei kann es sich bei einem RadarSensor um die erfasste Intensität der vom Sensor ausgestrahlten und von einem bewegten Objekt rückgestreuten Radarwellen oder daraus abgeleiteter Größen wie einem Doppler-Signal handeln. Bei einem IR-Sensor kann die Intensität der von einem Objekt ausgestrahlten Infrarotstrahlung gemessen werden. Allgemein kann die angezeigte Intensität für jeden Sensortyp verwendet werden, der basierend auf Messungen von Strahlungen oder Wellen arbeitet, die von einem sich bewegenden Objekt reflektiert oder abgestrahlt werden. Zum Beispiel können auch Ultraschallsensoren oder dergleichen verwendet werden.

Die Intensität des vom Bewegungssensor gemessenen Signals kann in einfacher Weise mit einem Erfassungsschwellwert verglichen werden. Liegt die Intensität höher als ein Schwellwert, der basierend auf einer Bewegung in einer bestimmten Entfernung festgelegt wurde, kann man annehmen, dass die entsprechende Bewegung in einer Entfernung vom Sensor stattfindet, die kleiner als die bestimmte Entfernung ist. Ein Bediener kann also basierend auf der Intensität in einfacher Weise eine Reichweiteneinstellung vornehmen. Da typischer Weise für die üblichen Sensortypen (Radar-, IR-, Ultraschallsensoren und dergleichen) das von erwachsenen Menschen generierte Signal nur wenig von der konkreten Körperform abhängt, ist es damit möglich, in verlässlicher Weise eine Reichweiteneinstellung vorzunehmen, die in erster Näherung nicht nur für den konkreten (erwachsenen) Bediener der Steuervorrichtung korrekt ist, sondern für sämtliche erwachsenen Menschen.

Die Intensität wird hierbei auf einer Skala zwischen einer minimalen Intensität und einer maximalen Intensität angezeigt und der Intensitätsschwellwert kann bezüglich der gleichen Skala eingestellt werden. Es wird also eine Skala als optisches Feedback gegeben, die anzeigt, welche Intensität eine aktuell ausgeführte Bewegung eines Bedieners der Steuervorrichtung hervorruft. Gleichzeitig kann der Bediener in einfacher Weise den Erfassungsschwellwert auf dieser Skala eintragen, z.B. mittels eines Touch-Screens direkt in der Skala, mittels einer Tastatureingabe oder auch mittels Druck- oder Drehknöpfen. Dies ermöglicht ein genaues Setzen des Erfassungsschwellwerts und damit eine genaue Reichweiteneinstellung. Zudem kann ein erfahrener Bediener aus der für eine bestimmte Entfernung auf der Skala angezeigten Intensität auf die Intensität bei anderen Entfernungen schließen und den Erfassungsschwellwert auf diese anhand der Skala geschätzte Intensität einstellen. Dies erlaubt es, die Reichweite von Bewegungssensoren noch flexibler und damit zeitsparender einzustellen.

Die Anzeigemittel können geeignet sein, weitere Betriebsparameter des Bewegungssensors oder eines vom Bewegungssensor gesteuerten elektrischen Geräts anzuzeigen, die Eingabemittel können geeignet sein, Einstellungen der weiteren Betriebsparameter zu erhalten, und die Kommunikationsmittel können geeignet sein, die erhaltenen Einstellungen der weiteren Betriebsparameter an den Bewegungssensor zu übertragen. Dadurch können weitere Betriebsparameter des Bewegungssensors überwacht und eingestellt werden, wie etwa ein Aktivierungszeitraum, eine Sendefrequenz, eine Schnittstellenauswahl und dergleichen. Zudem können bei Vorrichtungen, bei denen der Bewegungssensor in das durch den Bewegungssensor angesteuerte Gerät, wie z.B. Leuchten, Aufzügen, Fenstern, Türen (etwa Garagentoren oder Kaufhaustüren) oder dergleichen, integriert ist oder damit verbunden ist, auch die Betriebsparameter dieser Geräte an das Steuergerät übermittelt, dort angezeigt und von dort aus einstellbar sein. Zum Beispiel können der Aktivierungszeitraum oder die Helligkeit einer Leuchte nach Bewegungsdetektion oder eine Verzögerungszeit zwischen Bewegungsdetektion und Aktivierung eines Motors für die Aufzug- oder Türsteuerung über die Steuervorrichtung eingestellt werden.

Die Kommunikationsmittel können zum Kommunizieren mittels Funk ausgebildet sein. Insbesondere können die Kommunikationsmittel als Bluetooth-Schnittstelle ausgebildet sein, die mit einer Bluetooth-Schnittstelle des Bewegungssensors kommuniziert. Die Funkverbindung kann aber auch über ein WLAN oder dergleichen erfolgen. Ebenfalls möglich ist eine Kommunikation über Infrarotschnittstellen. Dies erlaubt eine Übermittlung von Daten zwischen Bewegungssensor und Steuervorrichtung auch über weitere Entfernungen.

Ein Computerprogramprodukt kann, wenn es auf einer tragbaren Vorrichtung mit Anzeigemitteln, Eingabemitteln und Kommunikationsmitteln ausgeführt wird, die Vorrichtung veranlassen, als Steuervorrichtung wie sie oben beschrieben wurde zu funktionieren. Damit kann jedes Gerät, das über die entsprechenden technischen Komponenten verfügt, wie z.B. ein Smartphone, ein Tablet, eine Smartwatch oder ein Laptop mittels eines geeigneten Programms bzw. einer Applikation oder App als Steuervorrichtung verwendet werden, wie sie oben beschrieben wurde.

Ein Bewegungsmeldesystem kann eine Steuervorrichtung wie sie oben beschrieben wurde und einen Bewegungssensor umfassen, von dessen Betriebsparametern zumindest ein Erfassungsschwellwert durch die Steuervorrichtung einstellbar ist. Auf diese Weise kann in einfacher und verlässlicher Weise die Reichweite von Bewegungssensoren in einem Bewegungsmeldesystem eingestellt werden.

Ein Verfahren zum Steuern eines Bewegungssensors mittels einer Steuervorrichtung wie sie oben beschrieben wurde umfasst: Erfassen einer Bewegung eines Bedieners der Steuervorrichtung in einem Erfassungsbereich des Bewegungssensors durch den Bewegungssensor; Empfangen und Anzeigen des aufgrund der Bewegung des Bedieners durch den Bewegungssensor erzeugten Erfassungssignals durch die Steuervorrichtung; Einstellen des Erfassungsschwellwerts auf das angezeigte Erfassungssignal mit der Steuervorrichtung, um eine Reichweite des Bewegungssensors auf die Position des Bedieners einzustellen; Übertragen des eingestellten Erfassungsschwellwerts an den Bewegungssensor und Setzen des eingestellten Erfassungsschwellwerts als gültigen Erfassungsschwellwert des Bewegungssensors. Durch diese Verfahren wird es einem Bediener der Steuervorrichtung in einfacher Weise ermöglicht, den Erfassungsschwellwert eines Bewegungssensors derart einzustellen, dass der Sensor nach Setzen des Erfassungsschwellwerts eine Detektionsreichweite hat, die der Entfernung des Bedieners vom Bewegungssensor entspricht.

Die vorliegende Erfindung soll im Folgenden mit Bezug auf die Figuren näher beschrieben werden. Diese Beschreibung ist aber als rein beispielhaft zu verstehen. Die vorliegende Erfindung ist durch den Gegenstand der Ansprüche bestimmt. Es zeigt:
- **Fig. 1**: eine schematische Darstellung einer Steuervorrichtung im Einsatz;
- **Fig. 2**: eine schematische Darstellung einer möglichen Ausgestaltung einer Steuervorrichtung; und

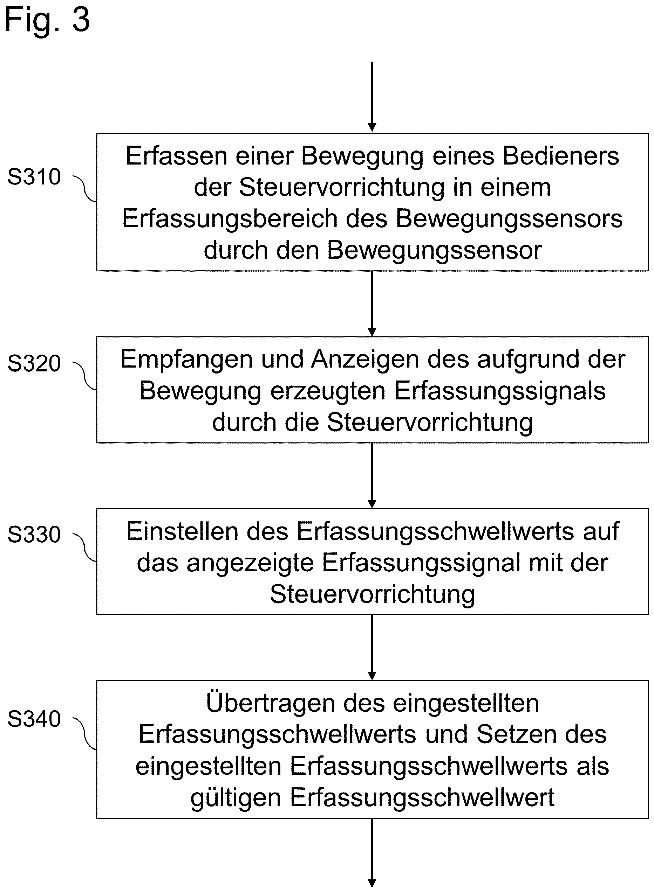

- **Fig. 3**: ein schematisches Ablaufdiagram eines Verfahrens zur Verwendung einer Steuervorrichtung.

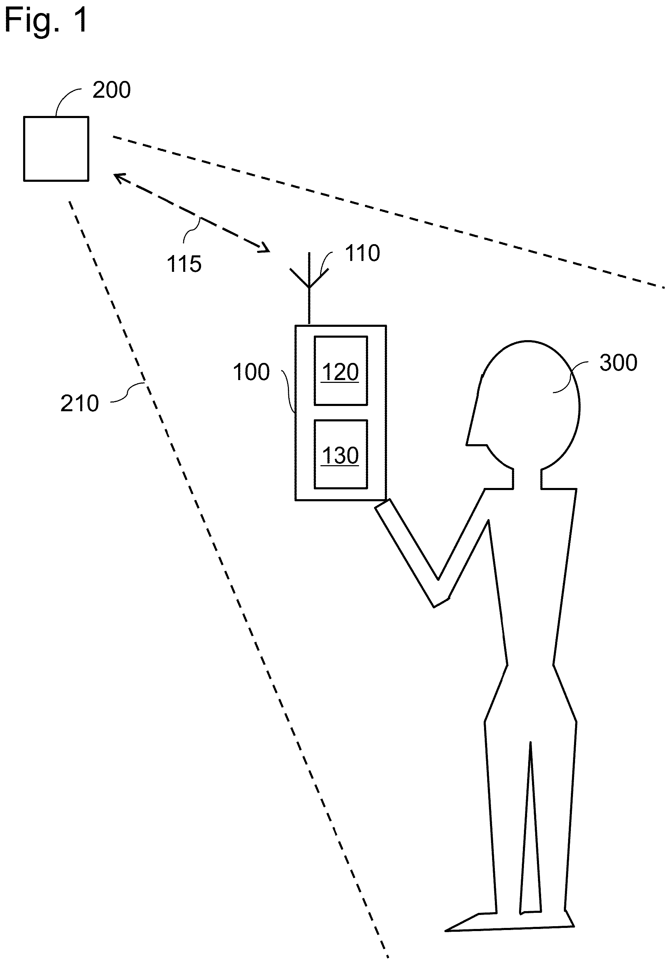

Die Fig. 1 zeigt schematisch den Einsatz einer Steuervorrichtung 100 zum Steuern eines Bewegungssensors 200 durch einen Bediener 300.

Der Bewegungssensor 200 kann hierbei Bewegungen in einem durch die Ausgestaltung des Sensors definierten Erfassungs- oder Sichtbereich 210 detektieren. Der Bewegungssensor 200 kann hierzu im Prinzip sämtliche aus dem Stand der Technik bekannten Detektionsverfahren einsetzen. Zum Beispiel kann der Bewegungssensor 200 Infrarotstrahlung messen, die von einem Objekt im Erfassungsbereich 210 ausgestrahlt oder reflektiert wird, wenn der Bewegungssensor 200 selbst Infrarotstrahlen aussendet. Ebenso kann der Bewegungssensor 200 auch als Ultraschallsensor ausgebildet sein, dessen Messungen auf der Detektion von reflektierten Schallwellen basiert. Es kann im Wesentlichen jeder Sensor verwendet werden, der in der Lage ist z.B. aufgrund von detektierter Strahlung oder detektierten Wellen eine Bewegung im Erfassungsbereich 210 zu registrieren.

Im Folgenden soll davon ausgegangen werden, dass der Bewegungssensor 200 Radarwellen aussendet und Bewegungen aufgrund der reflektierten Radarwellen detektiert. Derartige Bewegungssensoren 200 sind aus dem Stand der Technik bekannt. Eine detaillierte Beschreibung kann an dieser Stelle also entfallen.

Der Bediener 300 befindet sich mit der tragbaren Steuervorrichtung 100 im Erfassungsbereich 210, um eine Reichweiteneinstellung (und/oder weitere Einstellungen) des Bewegungssensors 200 vorzunehmen. Hierzu bewegt sich der Bediener 300 nach Starten der Reichweitenfestsetzung, z.B. durch Starten eines auf der Steuervorrichtung 100 gespeicherten Programms, in einem von ihm gewählten Abstand zum Bewegungssensor 200. Diese Bewegung wird vom Bewegungssensor 200 detektiert und in ein Erfassungssignal umgewandelt. Zum Beispiel kann der Bewegungssensor 200 eine vom Bediener 300 rückgestreute Radarwelle erfassen und deren Amplitude, Frequenz und Phase bestimmen. Aus dem gemessenen Signal lässt sich auf eine Bewegung schließen. Das Signal ist umso deutlicher zu detektieren je näher der Bediener am Bewegungssensor 200 positioniert ist.

Das vom Bewegungssensor 200 ermittelte Erfassungssignal wird der Steuervorrichtung 100 über eine Kommunikationsverbindung 115 mitgeteilt. Hierzu weist die Steuervorrichtung 100 Kommunikationsmittel 110 auf, die geeignet sind, mit entsprechenden Kommunikationsmitteln im Bewegungssensor 200 Daten auszutauschen. Die Kommunikationsmittel 110 können eine an sich bekannte Funk- oder eine Infrarotschnittstelle bereitstellen. Zum Beispiel kann die Kommunikation mittels Bluetooth oder einem WLAN erfolgen.

Das durch die aktuelle Bewegung des Bedieners 300 erzeugte Erfassungssignal wird hierauf durch Anzeigemittel 120 der Steuervorrichtung 100 angezeigt. Der Bediener 300 erhält also eine unmittelbare, quasi instantane Rückmeldung, wie seine derzeitig ausgeführten Bewegungen vom Bewegungssensor 200 wahrgenommen werden. Dies erlaubt es dem Bediener 300 in einfacher Weise zu verstehen, ob die eingenommene Entfernung bei den ausgeführten Bewegungen zu einem gewünschten Erfassungssignal im Bewegungssensor 200 führt.

Die Anzeigemittel 120 können hierbei als Bildschirm ausgebildet sein, z.B. als LCD-Bildschirm oder dergleichen, auf dem eine dem Erfassungssignal entsprechende Anzeige dargestellt wird. Die Anzeigemittel 120 können aber auch wesentlich einfacher ausgebildet sein, z.B. als eine Mehrzahl von Leuchten, die jeweils für eine bestimmte Stärke des Erfassungssignals stehen oder als einfaches Displayfeld für numerische Anzeigen, wobei die Stärke bzw. Intensität des Erfassungssignals durch eine Nummernanzeige, z.B. von 0 bis 100, dargestellt wird. Ausschlaggebend ist hierbei allein, dass dem Bediener 300 vom Bewegungssensor 200 eine Rückmeldung über das derzeit anliegende Erfassungssignal gegeben wird.

Dies erlaubt es dem Bediener 300 nämlich mittels Eingabemitteln 130 der Steuervorrichtung 100 einen Erfassungsschwellwert des Bewegungssensors 200 einzustellen, der bestimmt, ob ein gemessenes Erfassungssignal ein Ereignis (z.B. Licht an, Motor an/aus oder dergleichen) in einem vom Bewegungssensor 200 gesteuerten Gerät auslöst oder nicht. So kann der Erfassungsschwellwert z.B. die Intensität des vom Bewegungssensor gemessenen Signals angeben, ab dem das Ereignis ausgelöst wird.

Die Eingabemittel 130 können hierbei zusammen mit den Anzeigemitteln 120 als Touch-Screen ausgebildet sein. Dies ist besonders intuitiv, da die Anzeige des Erfassungssignals und die Eingabe des Erfassungsschwellwerts über eine einzelne Schnittstelle erfolgen können. Insbesondere ist es möglich, den eingestellten Erfassungsschwellwert in Überlagerung zum Erfassungssignal auf dem Touch-Screen anzuzeigen und dort auch verändern zu können. Alternativ kann die Eingabe aber auch über jeden anderen Typ von Eingabeschnittstelle erfolgen, z.B. über eine Tastatur, über Druckknöpfe oder Dreh- oder Schieberegler. Einzig relevant ist die Tatsache, dass der Erfassungsschwellwert unter Rücksichtnahme auf das derzeit ausgegebene Erfassungssignal eingestellt werden kann.

Der Bediener 300 kann also mittels der Eingabemittel 120 der Steuervorrichtung 100 einen Erfassungsschwellwert eingeben, der dann mittels der Kommunikationsmittel 110 an den Bewegungssensor 200 übertragen wird. Dort wird der Erfassungsschwellwert, z.B. standardmäßig oder aufgrund eines entsprechenden Befehls im Signal von Steuervorrichtung 100 zu Bewegungssensor 200, als neu gültiger Erfassungsschwellwert gesetzt. Die Schwelle für das Auslösen von Ereignissen mittels des Bewegungssensors 200 lässt sich also in einfacher Weise von dem entfernt zum Bewegungssensor 200 stehenden Bediener 300 vornehmen.

Der Erfassungsschwellwert kann hierbei entsprechend des angezeigten Erfassungssignals eingestellt werden. Dadurch kann ein Bediener 300 seine eigene Positionierung im Erfassungsbereich 300 dazu verwenden, eine Reichweiteneinstellung für den Bewegungssensor 200 vorzunehmen. Im einfachsten Fall wird der Erfassungsschwellwert auf die derzeit angezeigte Größe des Erfassungssignals gesetzt. Dann entspricht die Reichweite des Bewegungssensors 200 in erster Näherung dem Abstand des Bedieners 300 zum Bewegungssensor 200.

Der Bediener 300 kann den Erfassungsschwellwert aber auch anhand des angezeigten Erfassungssignals frei wählen, um anhand seiner Erfahrung einen von seiner derzeitigen Position abweichenden Abstand zum Bewegungssensor 200 als Reichweite einzustellen.

Auf diese Weise wird die Reichweiteneinstellung von Bewegungssensoren 200 extrem vereinfacht. Anstatt in mehrfach ausgeführten Arbeitsschritten mit zwischenliegender Prüfung der Sensorantwort die Sensitivität des Bewegungssensors 200 direkt am Sensor einstellen zu müssen, kann in einfacher, zeitsparender und bequemer Weise die Reichweiteneinstellung direkt im Erfassungsbereich 210 vorgenommen werden. Zudem erlaubt die Anzeige des Erfassungssignals eine verlässlichere Einstellung der Sensorreichweite, da das Setzen des Erfassungsschwellwerts nicht nach Versuch und Irrtum erfolgt, sondern anhand der tatsächlich vom Sensor gemessenen Werte. Ein mühevolles "Abtasten" des Erfassungsbereichs mit einer tragbaren Steuerung entfällt daher. Vielmehr ist eine in erster Näherung korrekte Reichweiteneinstellung auf den ersten Blick in einem einzigen Schritt durchführbar.

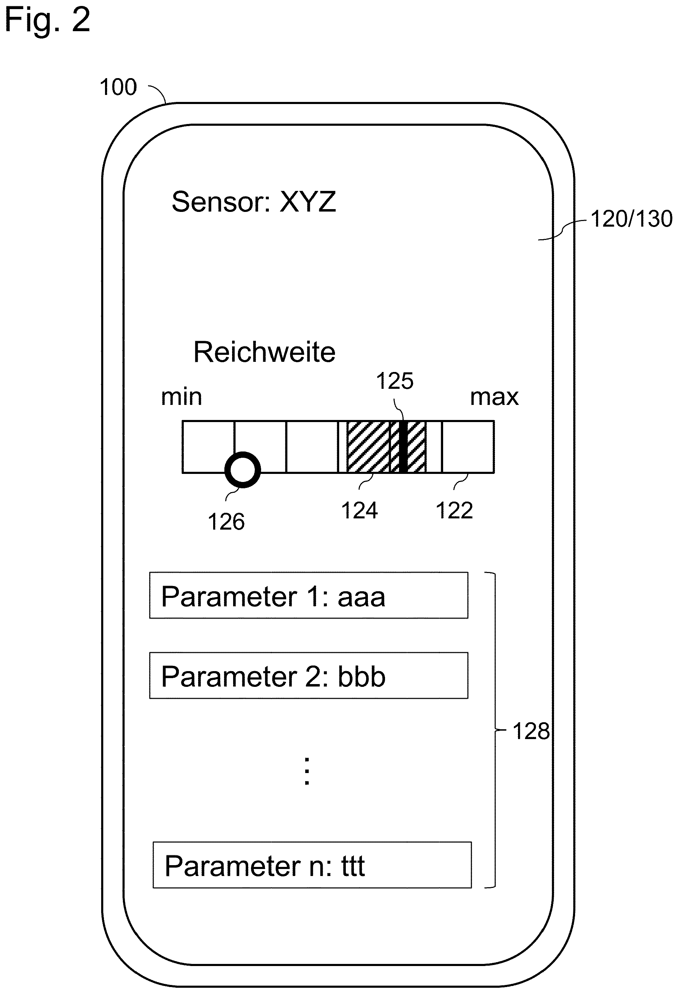

Ein Beispiel für eine Ausgestaltung der Steuervorrichtung 100 ist in der Fig. 2 gezeigt. Hier ist die Steuervorrichtung 100 als Smartphone ausgebildet, dass einen Touch-Screen als kombiniertes Anzeigemittel 120 und Eingabemittel 130 aufweist. In ähnlicher Weise kann auch ein Tablet oder eine Smartwatch als Steuervorrichtung ausgestaltet sein. Das die Steuervorrichtung 100 konstituierende Smartphone weist die üblichen Kommunikationsmittel 110 auf, wie Funkantennen für den Mobilfunk, für die Anbindung in ein WLAN, eine Bluetooth-Schnittstelle, eine Infrarot-Schnittstelle, eine NFC-Schnittstelle und dergleichen. Das Smartphone kann also mit jedem Bewegungssensor 200 kommunizieren, der eine entsprechende Schnittstelle aufweist.

Die oben beschriebenen Funktionalitäten der Steuervorrichtung 100 sind auf dem Smartphone mittels einer Applikation oder App, d.h. einem Computerprogram, implementiert. Das Smartphone weist alle hierzu notwendigen und aus dem Stand der Technik bekannten Komponenten wie Prozessoren, Speicher und dergleichen auf. Durch Ausführten der App kann das Smartphone als Steuervorrichtung 100 fungieren.

Mittels der App ist das Smartphone in der Lage, sämtliche Bewegungssensoren anzuzeigen, die in seiner Reichweite liegen, und für die Ansteuerung auszuwählen. In der Fig. 2 ist eine Anzeige nach Auswahl des Sensors "XYZ" gezeigt. Sobald der Sensor ausgewählt ist, kann jedes Verstellen des Erfassungsschwellwerts in der App eine Neufestsetzung des Erfassungsschwellwerts im ausgewählten Bewegungssensor 200 zur Folge haben. Es kann aber auch nötig sein, einen neuen Erfassungsschwellwert in der App aktiv durch Betätigen eines entsprechenden Feldes zu setzen.

Als Indikator für die Reichweite dieses Bewegungssensors ist im Beispiel der Fig. 2 eine Skala 122 dargestellt, auf der die Intensität des Erfassungssignals wiedergegeben wird. Die Skala 122 reicht hier von einer Minimal- zu einer Maximalintensität, kann sich aber auch auf jeden beliebigen Intensitätsbereich beziehen. In der Skala 122 ist als schraffierter Bereich die Schwankungsbreite 124 der derzeit gemessenen Intensität angezeigt. Zudem ist die aktuelle Intensität 125 als schwarzer Balken dargestellt. Ein Bediener der Steuervorrichtung 100 erkennt also auf den ersten Blick, zu welchem Intensitätsbereich des Sensorsignals von ihm durchgeführte Bewegungen führen. Es versteht sich von selbst, dass die konkrete Darstellung der Skala 122 und der angezeigten Intensität 124, 125 in der Fig. 2 rein beispielhaft ist. Jede andere entsprechend Form der Darstellung ist ebenfalls möglich.

Die angezeigte Intensität 124, 125 ist von der Entfernung des Bedieners 300 zum Bewegungssensor 200 abhängig. Je näher der Bediener 300 dem Bewegungssensor 200 ist, desto näher am Maximalwert ist die angezeigte Intensität 124, 125. Es ist dem Bediener 300 über die Anzeige des Erfassungssignals bzw. seiner Intensität und der eigenen Position im Erfassungsbereich 210 also möglich, einen Zusammenhang zwischen der Reichweite des Bewegungssensors 200 und dem gemessenen Erfassungssignal herzustellen.

Um nun eine Reichweiteneinstellung vorzunehmen, ist der Darstellung der Skala 122 eine Darstellung eines Schiebers 126 überlagert, dessen Position auf der Skala 122 den Erfassungsschwellwert auf die der Position entsprechende Intensität einstellt und dem Bewegungssensor 200 übermittelt. Setzt man also z.B. den Schieber 126 mittels einer entsprechenden Geste in den angezeigten Bereich der Intensität 124, 125, so entspricht dies der Festsetzung eines entsprechenden Intensitätsschwellwerts im Bewegungssensor 200. Dies kann gleichzeitig als Reichweiteneinstellung angesehen werden, da Bewegungen in größerer Entfernung als derjenigen, bei der der Erfassungsschwellwert gesetzt wurde, eine geringere Intensität erzeugen und dadurch kein Ereignis auslösen werden. Umgekehrt führen Bewegungen in kleinerer Entfernung zu einer größeren Intensität und damit zur Ereignisauslösung.

Es ist auf diese Weise also möglich, mittels einer Steuervorrichtung 100, die z.B. als Smartphone ausgebildet sein kann, die Reichweite einer großen Klasse von Bewegungssensoren, wie z.B. von Radar- bzw. HF-Sensoren, in einfacher, verlässlicher und zeitsparender Weise einstellen zu können.

Zudem können mittels der Steuervorrichtung 100 auch weitere Betriebsparameter des Bewegungsmelders 200 verändert bzw. eingestellt werden. Dies ist für das Beispiel der Fig. 2 durch die Felder 128 dargestellt. Derartige Parameter können z.B. ein Aktivierungszeitraum, eine Sendefrequenz, eine Schnittstellenauswahl und dergleichen sein. Zudem können über den Bewegungssensor 200 auch die durch den Bewegungssensor 200 angesteuerten Geräte, wie z.B. Leuchten, Aufzügen, Fenster, Türen (etwa Garagentoren oder Kaufhaustüren) oder dergleichen, bzw. deren Betriebsparameter mittels der Steuervorrichtung 100 gesteuert werden.

Diese Betriebsparameter können an die Steuervorrichtung 100 übermittelt werden, dort angezeigt werden und von dort aus einstellbar sein. Zum Beispiel können der Aktivierungszeitraum oder die Helligkeit einer Leuchte nach Bewegungsdetektion oder eine Verzögerungszeit zwischen Bewegungsdetektion und Aktivierung eines Motors für die Aufzug- oder Türsteuerung über die Steuervorrichtung eingestellt werden. Dies erfolgt z.B. im Beispiel der Fig. 2 in einem der Felder 128, in die entsprechende Werte für die Betriebsparameter eingegeben werden können.

Die Steuervorrichtung 100 ermöglicht es also neben dem Einstellen des Erfassungsschwellwerts, eine breite Klasse von Betriebsparametern des Bewegungsmelders 200 bzw. von elektrischen Geräten anzupassen, die dieser steuert.

Ein Verfahren zur Einstellung einer Reichweite eines Bewegungssensors mittels einer Steuervorrichtung wie sie oben beschrieben wurde umfasst die folgenden Schritte:
Bei S310 wird eine Bewegung eines Bedieners der Steuervorrichtung in einem Erfassungsbereich des Bewegungssensors durch den Bewegungssensor erfasst. Hierzu positioniert sich der Bediener in einer von ihm gewünschten Entfernung zum Bewegungssensor, während er die Steuervorrichtung in der Hand hält, und führt eine typische Bewegung aus, die von dem Bewegungssensor erkannt werden soll.
Bei S320 wird das aufgrund der Bewegung des Bedieners durch den Bewegungssensor erzeugten Erfassungssignals an die Steuervorrichtung gesendet, von dieser empfangen und angezeigt. Der Bediener erhält also eine unmittelbare Rückmeldung des durch seine Bewegung erzeugten Erfassungssignals.
Bei S330 wird der Erfassungsschwellwert mit der Steuervorrichtung auf das angezeigte Erfassungssignal eingestellt, um eine Reichweite des Bewegungssensors auf die Position des Bedieners einzustellen. Anhand des angezeigten Erfassungssignals ist es also in besonders einfacher, intuitiver und zeitsparender Weise möglich, den Erfassungsschwellwert des Bewegungssensors auf einen Wert einzustellen, der einer Reichweitenbegrenzung auf die Entfernung des Bedieners vom Bewegungssensor entspricht.
Bei S340 wird der eingestellte Erfassungsschwellwert an den Bewegungssensor übertragen und dort als gültiger Erfassungsschwellwert gesetzt. Dadurch wird die Einstellung des Erfassungsschwellwerts fixiert. Der Erfassungsschwellwert bleibt auf dem eingestellten Wert, bis in die Steuervorrichtung ein neuer Erfassungsschwellwert eingegeben wird oder mittels der Steuervorrichtung der Befehl ergeht, die Schritte S310 bis S340 zu wiederholen, um einen neuen Erfassungsschwellwert zu setzen.

Die oben dargestellten Vorrichtungen und Verfahren ermöglichen es also, Reichweiteneinstellungen von Bewegungssensoren einfach, verlässlich und zeitsparend durchzuführen.

## Patentansprüche

1. Tragbare Steuervorrichtung (100) zum Steuern eines Bewegungssensors (200), umfassend
Kommunikationsmittel ( 110) zum drahtlosen Kommunizieren mit einem Bewegungssensor (200), die geeignet sind, ein momentan in dem Bewegungssensor (200) erzeugtes Erfassungssignal von dem Bewegungssensor (200) zu empfangen, während die Steuervorrichtung (100) sich in einem Erfassungsbereich (210) des Bewegungssensors (200) befindet;
Anzeigemittel (120) zum Anzeigen des Erfassungssignals; und
Eingabemittel (130) zum Einstellen eines Erfassungsschwellwerts, bei dem von dem Bewegungssensor (200) eine Bewegung erfasst wird, basierend auf dem angezeigten Erfassungssignal; wobei
die Kommunikationsmittel (110) ferner dazu geeignet sind, den eingestellten Erfassungsschwellwert an den Bewegungssensor (200) als gültigen Erfassungsschwellwert des Bewegungssensors (200) zu übertragen,
**dadurch gekennzeichnet, dass**
die Anzeigemittel (120) geeignet sind, eine Intensität des momentan in dem Bewegungsmelder (200) erzeugten Erfassungssignals auf einer Skala (122) zwischen einer minimalen Intensität und einer maximalen Intensität anzuzeigen; und
die Eingabemittel (130) geeignet sind, den Erfassungsschwellwert bezüglich der gleichen Skala (122) auf einen Intensitätswert einzustellen.

2. Steuervorrichtung (100) nach Anspruch 1, wobei
die Anzeigemittel (120) und die Eingabemittel (130) kombiniert als Touch- Screen ausgebildet sind.

3. Steuervorrichtung (100) nach einem der vorherigen Ansprüche, wobei
die Anzeigemittel (120) geeignet sind, zusatzlich zum Erfassungssignal den eingestellten Erfassungsschwellwert anzuzeigen.

4. Steuervorrichtung (100) nach einem der vorherigen Ansprüche, wobei
die Anzeigemittel (120) geeignet sind, weitere Betriebsparameter des Bewegungssensors (200) oder eines vom Bewegungssensor (200) gesteuerten elektrischen Geräts anzuzeigen;
die Eingabemittel (130) geeignet sind, Einstellungen der weiteren Betriebsparameter zu erhalten; und
die Kommunikationsmittel ( 110) geeignet sind, die erhaltenen Einstellungen der weiteren Betriebsparameter an den Bewegungssensor (200) zu übertragen.

5. Steuervorrichtung (100) nach einem der vorherigen Ansprüche, wobei
die Kommunikationsmittel (110) zum Kommunizieren mittels Funk ausgebildet sind.

6. Computerprogramprodukt, das, wenn es auf einer tragbaren Vorrichtung mit Anzeigemitteln (120), Eingabemitteln (130) und Kommunikationsmitteln (110) ausgeführt wird, die Vorrichtung veranlasst, als Steuervorrichtung (100) nach einem der vorherigen Ansprüche zu funktionieren.

7. Bewegungsmeldesystem, umfassend
eine Steuervorrichtung (100) nach einem der Ansprüche 1 bis 5; und
einen Bewegungssensor (200), von dessen Betriebsparametern zumindest ein Erfassungsschwellwert durch die Steuervorrichtung (100) einstellbar ist.

8. Verfahren zum Steuern eines Bewegungssensors (200) mittels einer Steuervorrichtung (100) nach einem der Ansprüche 1 bis 5, umfassend
Erfassen einer Bewegung eines Bedieners (300) der Steuervorrichtung (100) in einem Erfassungsbereich (210) des Bewegungssensors (200) durch den Bewegungssensor (200);
Empfangen und Anzeigen des aufgrund der Bewegung des Bedieners (300) durch den Bewegungssensor (200) erzeugten Erfassungssignals durch die Steuervorrichtung (100);
Einstellen des Erfassungsschwellwerts auf das angezeigte Erfassungssignal mit der Steuervorrichtung (100), um eine Reichweite des Bewegungssensors (200) auf die Position des Bedieners (300) einzustellen;
Übertragen des eingestellten Erfassungsschwellwerts an den Bewegungssensor (200) als gültigen Erfassungsschwellwert des Bewegungssensors (200).

## Claims

1. A portable control device (100) for controlling a motion sensor (200), comprising communication means (110) for wirelessly communicating with a motion sensor (200), adapted to detect a detection signal currently present in the motion sensor (200) from the motion sensor (200) while the control device (100) is located in a detection area (210) of the motion sensor (200);
display means (120) for displaying the detection signal; and
input means (130) for setting a detection threshold at which motion is detected by the motion sensor (200) based on the indicated detection signal; wherein
the communication means (110) are also suitable for transmitting the set detection threshold value to the motion sensor (200) as a valid detection threshold value of the motion sensor (200),
**characterised in that**
the display means (120) are adapted to indicate an intensity of the detection signal currently generated in the motion detector (200) on a scale (122) between a minimum intensity and a maximum intensity; and
the input means (130) are adapted for setting the detection threshold to an intensity value with respect to the same scale (122)

2. The control device (100) according to claim 1, wherein
the display means (120) and the input means (130) are combined in the form of a touch screen.

3. The control device (100) according to any of the preceding claims, wherein
the display means (120) are adapted to display the set detection threshold value in addition to the detection signal.

4. The control device (100) according to one of the preceding claims, wherein
the display means (120) are adapted to display further operating parameters of the motion sensor (200) or of an electrical device controlled by the motion sensor (200);
the input means (130) are adapted to receive settings of the further operating parameters; and
the communication means (110) are adapted to transmit the settings received for the further operating parameters to the motion sensor (200).

5. The control device (100) according to one of the preceding claims, wherein
the communication means (110) are designed to communicate by radio.

6. A computer program product which, when executed on a portable device having display means (120), input means (130) and communication means (110), causes the device to function as a control device (100) according to any of the preceding claims.

7. A motion detection system, comprising
A control device (100) according to any of claims 1 to 5; and
a motion sensor (200), of whose operating parameters at least a detection threshold value can be set by the control device (100).

8. A method for controlling a motion sensor (200) by means of a control device (100) according to any one of claims 1 to 5, comprising
detecting a movement of an operator (300) of the control device (100) in a detection range (210) of the motion sensor (200) by the motion sensor (200);
receiving and displaying the detection signal generated by the motion sensor (200) due to the movement of the operator (300) by the control device (100);
adjusting the detection threshold to the displayed detection signal with the control device (100) to adjust a range of the motion sensor (200) to the position of the operator (300);
transmitting the set detection threshold value to the motion sensor (200) as a valid detection threshold value of the motion sensor (200).

## Revendications

1. Appareil de commande portatif (100) pour commander un capteur de mouvement (200), comprenant
des moyens de communication (110) pour communiquer sans fil avec un capteur de mouvement (200), adaptés pour recevoir un signal de détection généré momentanément dans le capteur de mouvement (200) par le capteur de mouvement (200) pendant que l'appareil de commande (100) se trouve dans une zone de détection (210) du capteur de mouvement (200) ;
des moyens d'affichage (120) pour afficher le signal de détection ; et
des moyens de saisie (130) pour régler une valeur seuil de détection, pour laquelle un mouvement est détecté par le capteur de mouvement (200), sur la base du signal de détection affiché ;
les moyens de communication (110) étant en outre adaptés pour transmettre la valeur seuil de détection réglée au capteur de mouvement (200) en tant que valeur seuil de détection valide du capteur de mouvement (200),
**caractérisés en ce que**
les moyens d'affichage (120) sont adaptés pour afficher une intensité du signal de détection actuellement généré dans le détecteur de mouvement (200) sur une échelle (122) allant d'une intensité minimale à une intensité maximale ; et les moyens de saisie (130) sont adaptés pour régler la valeur seuil de détection sur une valeur d'intensité par rapport à la même échelle (122).

2. Appareil de commande (100) selon la revendication 1, dans lequel les moyens d'affichage (120) et les moyens de saisie (130) sont combinés pour former un écran tactile.

3. Appareil de commande (100) selon l'une des revendications précédentes, dans lequel
les moyens d'affichage (120) sont adaptés pour afficher la valeur seuil de détection réglée en plus du signal de détection.

4. Appareil de commande (100) selon l'une des revendications précédentes, dans lequel
les moyens d'affichage (120) sont adaptés pour afficher d'autres paramètres de fonctionnement du capteur de mouvement (200) ou d'un appareil électrique commandé par le capteur de mouvement (200) ;
les moyens de saisie (130) sont adaptés pour obtenir des réglages des autres paramètres de fonctionnement ; et
les moyens de communication (110) sont adaptés pour transmettre les réglages obtenus des autres paramètres de fonctionnement au capteur de mouvement (200).

5. Appareil de commande (100) selon l'une des revendications précédentes, dans lequel
les moyens de communication (110) sont conçus pour communiquer par radio.

6. Produit logiciel qui, lorsqu'il est exécuté sur un appareil portatif doté de moyens d'affichage (120), de moyens de saisie (130) et de moyens de communication (110), amène l'appareil à fonctionner comme appareil de commande (100) selon l'une des revendications précédentes.

7. Système de détection de mouvement, comprenant
un appareil de commande (100) selon l'une des revendications 1 à 5 ; et
un capteur de mouvement (200), dont au moins une valeur seuil de détection des paramètres de fonctionnement peut être réglée par l'appareil de commande (100).

8. Procédé de commande d'un capteur de mouvement (200) au moyen d'un appareil de commande (100) selon l'une des revendications 1 à 5, comprenant
la détection d'un mouvement d'un opérateur (300) de l'appareil de commande (100) dans une zone de détection (210) du capteur de mouvement (200) par le capteur de mouvement (200) ;
la réception et l'affichage par l'appareil de commande (100) du signal de détection généré par le capteur de mouvement (200) en raison du mouvement de l'opérateur (300) ;
le réglage de la valeur seuil de détection sur le signal de détection affiché à l'aide de l'appareil de commande (100) afin de régler la portée du capteur de mouvement (200) sur la position de l'opérateur (300) ;
la transmission de la valeur seuil de détection réglée au capteur de mouvement (200) en tant que valeur seuil de détection valide du capteur de mouvement (200).
